# Europäisches Patentamt

## European Patent Office

## Office européen des brevets

(11) Publication number: **0 189 952**
**B1**

(12) # EUROPEAN PATENT SPECIFICATION

(45) Date of publication of the patent specification:
**11.01.89**

(51) Int. Cl.⁴: **B23D 19/06**

(21) Application number: **86200041.1**

(22) Date of filing: **10.01.86**

(54) Equipment for slitting continuous tapes into strips with shaped side profile, in particular for metal sheet.

(30) Priority: **23.01.85 IT 1919785**

(43) Date of publication of application:
**06.08.86 Bulletin 86/32**

(45) Publication of the grant of the patent:
**11.01.89 Bulletin 89/2**

(84) Designated Contracting States:
**AT BE CH DE FR GB LI LU NL SE**

(56) References cited:
**AT-B- 321 069**
**DE-A- 3 038 627**
**GB-A- 1 391 566**
**US-A- 2 804 134**
**US-A- 3 863 537**

(73) Proprietor: **F.I.C.I. FINANZIARIA INDUSTRIALE COMMERCIALE IMMOBILIARE S.p.A., Corso Matteotti, 8, Milano(IT)**

(72) Inventor: **Castiglioni, Giovanni Pietro, Via Nazario Sauro 35, I-21043 Castellanza, Varese(IT)**

(74) Representative: **De Carli, Erberto et al, ING. BARZANO' & ZANARDO MILANO S.p.A. Via Borgonuovo, 10, I-20121 Milano(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to an equipment for the continuous cutting of longitudinal coils, in particular provided for machines and plants effecting the cutting of metal-plate coils into strips with shaped, essentially sinusoidal and/or mixed, profile, and destined to pressing or to shearing.

Slitters are known, used, e.g., to carry out the slitting of a continuous coil of metal plate into a plurality of continuous strips placed side by side, snaky-shaped, such as those described in US-A 1 433 138 and US-A 3 517 532.

Said devices are provided with simple rotary slitting rings superimposed and provided with snaky slitting surfaces opposite and conjugate and cooperating with each other.

Within said devices the metal-plate coil is made run, and each one of these rings cooperates with its respective conjugate ring.

Each of these rings has a slitting edge peripherally extending on a plane essentially transversal relatively to the plane on which the metal plate lays.

The known slitting devices slit the coils of metal plate, or of other material, into strips with snaky edges conjugated with each other.

The snakelike strips so obtained in continuous production show however a plurality of defects, mainly due to the difficulty of keeping the slitting elements or rings cooperating with each other in a constantly correct mutual position.

In other terms, no axial clearances must exist between the shafts or cylinders rotatably supporting said slitting elements.

Such clearances result indeed particularly noxious for the integrity of the same cutting edges, above all if they are present in a plurality of couples, to carry out the slitting of a plurality of strips side by side.

Moreover, just in case of contemporaneous production of a plurality of strips with conjugated snaky-shaped edges, on the same edges deformations occur, mainly due to the cutting stresses, as deep-drawings, drawings and other defects, which thus do not allow coils to be obtained of shaped strip ready for use and of good quality, on industrial scale.

Purpose of the present invention is to solve the said problems by providing an equipment for the slitting of strips with shaped side profile, allowing a finished product of good quality to be obtained.

Further purpose is to obtain the longest useful life of cutting rings, and to prevent their deteriorating.

These and further purposes according to the present invention are achieved by providing an equipment for the continuous slitting of coils of material, in particular of coils of metal plate and the like, into longitudinal strips with shaped side profile, essentially of sinusoidal and/or mixed outline, of the type comprising a base onto which a stand is positioned, supporting a pair of slitting cylinders, means for driving the rotation of said cylinders and related motor means being provided, said slitting cylinders essentially bearing a set of blades with shaped perimetral cutting profile, said blades being positioned on said cylinders such that co-operating blades are positioned one above the other and in staggered fashion along the axes of the cylinders, such as to provide a conjugated coupling of the shears type, characterized in that each of said slitting cylinders supports rigidly a set of blades positioned on its shaft with cutting edges alternately facing and not facing each other, said blades being cup-shaped and provided with central and axial bores, and such as to receive, between an inner surface of them and the surface of the supporting shaft a spacer ring, between two blades facing each other at least a couple of radially elastic means, and between two blades not facing each other at least a spacer element being provided.

The structural and functional characteristics and the advantages of an equipment according to the present invention shall be better understood from the disclosure of a preferred, but not limitative, form of embodiment thereof, referred to the related schematic drawings, wherein:

Fig. 1 is a plan view of an equipment according to the present invention,

Fig. 2 is a front view of a detail of equipment of fig. 1,

Fig. 3 is an enlarged view of a couple of slitting cylinders of equipment of fig. 1,

Fig. 4 is an enlarged partly sectional view of a portion of cylinders of fig. 3, and

Fig. 5 shows a portion of two cylinders in operative step of strip slitting from the tape.

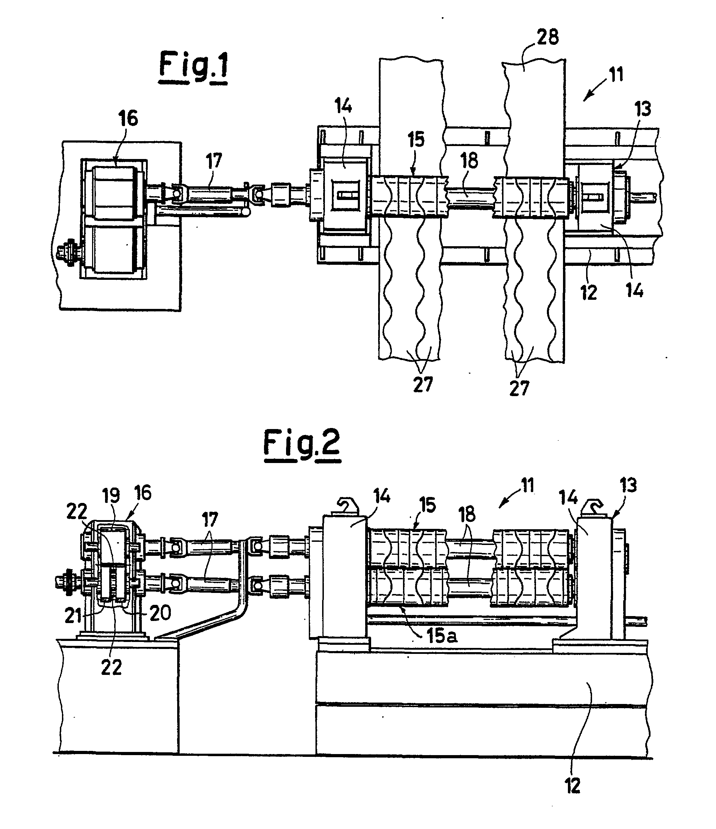

Referring to fig. 1, a slitting equipment according to the present invention is generally indicated with 11.

It essentially comprises a base 12 on which a stand 13 is placed, linked, by means of driving means, such as a device for the recovery and zeroing of clearances, and securing rotation homocineticity, to a related motor means (not shown), and essentially constituted by a couple of shoulders 14 supporting a couple of upper (15) and lower (15a) slitting cylinders.

Said device comprises a pinion box 16 wherein the clearance recovery and zeroing is e.g. provided, which can be constituted by a first gear wheel 19 of helical type, operatively linked to a second helical gear wheel constituted by portions 20 and 21 which can be approached to each other, elastic return means 22 being interposed.

Inbetween the pinion box 16 and the cutting cylinders 15, 15a of the box 13, a couple of extensions 17 is provided, such extensions being so made as to secure a perfect homocineticity and in-phase rotation of shafts 18 supporting the couple of cutting cylinders 15, 15a, independently from the distance between their centres.

Each one of said slitting cylinders 15, 15a is positioned on its shaft 18 by means of rectified keys (not shown), with very restricted values of dimension and shape tolerance, to the purpose of not introducing angular errors.

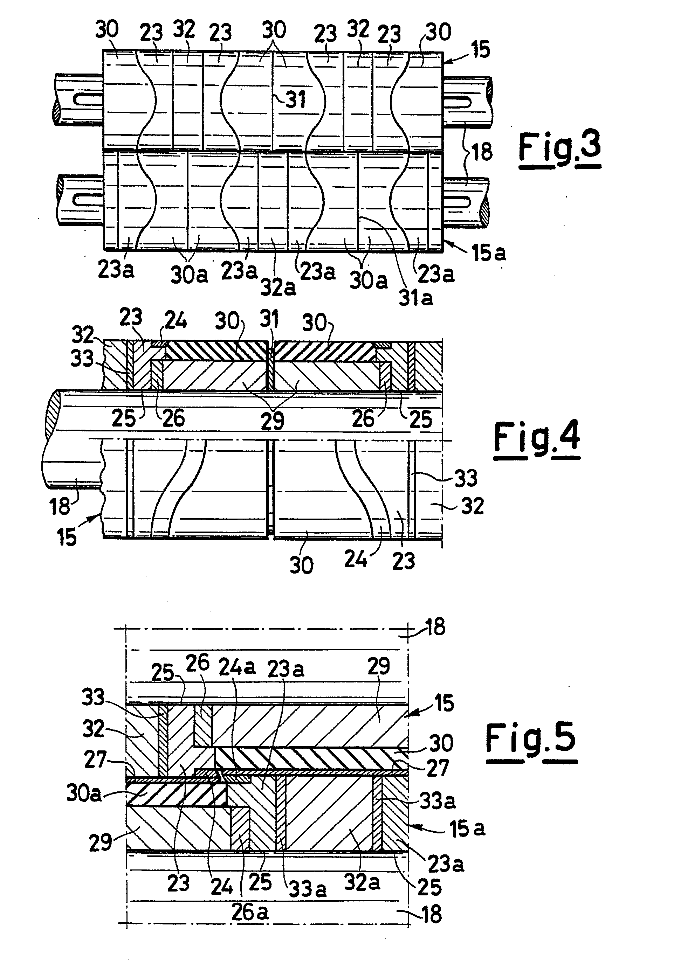

As shown in fig. 4, an upper slitting cylinder 15 supports a plurality of blades 23, e.g., with sinusoidal perimetral outline, and with added cutting element 24.

On the lower slitting cylinder 15a a plurality of blades 23a with cutting elements 24a is reported in the same way.

Said blades 23 and 23a are positioned on the two slitting cylinders 15, 15a staggered relatively to each other, so as to obtain a conjugated coupling of the shears type.

Each blade 23, 23a, made in form of cup or bell, centrally and axially bored in 25 so as to make it possible for it to be positioned on the shaft 18, houses between its cylindrical inner surface and the shaft 18 a spacer ring 26, 26a.

To the purpose of identifying and slitting a plurality of strips 27 obtained from a metal-plate tape being fed 28, e.g. coming from an unrolling swift (not shown), each sequential blade 23, 23a positioned on the shafts 18 results faced relatively to the foregoing and not faced relatively to the following blade.

More precisely, two blades 23, or two blades 23a, provided with cutting edges 24, 24a faced to each other, result separated by a pair of spacers 29 elastic supporting means 30, 30a, e.g., of rubber, between said spacers 29 and between said elastic means 30, 30a, compensator elements 31, 31a, disc-shaped, of indeformable plastic material being interposed.

On the contrary, two blades 23 and two blades 23a, positioned back-to-back, have interposed between them a spacer element 32, 32a, e.g., a metal ring, which envisages on opposite sides two compensator elements 33 or 33a facing to the base of the said blades.

As it can be observed in fig. 3, to upper blades 23 positioned back-to-back, with the interposition of the spacer element 32 and of the related compensator elements 33, a couple of elastic elements 30a with interposed a related compensator element 31a correspond on the lower cylinder.

The cutting edges 24 of the upper blades 23 interact with the cutting edges 24a of the lower blades 23a faced to each other.

It can be automatically observed that to upper blades 23 with cutting edges 24 faced to each other and containing elastic means 30 and related compensator element 31, cutting elements 24a of lower blades 23a positioned back-to-back, containing a related spacer element 32a and compensator elements 33a are opposed.

In fig. 5, the operative interaction is shown between the elements on an upper cutting cylinder 15 and the complementary elements of a lower cutting cylinder 15a.

It is interesting to note how at least an elastic element 30 of the upper cutting cylinder 15 accompanies upwards the strip 27 slitted by the cutting edge 24a of the blade 23a, and contemporaneously the elastic element 30a of the lower cutting cylinder 15a accompanies downwards the parallel strip 27 slitted by the cutting edge 24 of the blade 23.

The clearance between the cutter edges 24 and 24a of respective blades 23 and 23a is secured and adjusted by the compensator elements 31, 31a and

33, 33a, so as to maintain a perfect and continuous slitting efficiency.

It should be moreover noted that the elastic elements 30 and 30a, once mounted, result to have a diameter longer than of blades and related cutting edges.

In this way, during the slitting stage, said further compressed elements discharge and zero the noxious components of the cutting forces, thus avoiding the deformations of burring, deep-drawing, and so forth.

The separation by slitting of strips 27 from the metal plate 28 being fed to the slitting cylinders results hence sharp, as the blades and related cutting edges compenetrate each other, without causing disturbances exactly thanks to the presence of the above said elastic elements.

It can be noted that advantageously, it being anyway necessary periodically sharpen the cutting edges 24, 24a of the blades 23, 23a, inside the same blades a spacer ring 26, 26a has been provided.

Such a spacer ring 26, 26a acts as compensator element, in that during the sharpening a side peripheral material withdrawal from the cutting edge occurs.

Such a decrease in blade tickness is followed by an equal decrease of the spacer ring 26, 26a and the perfect total primitive arrangement on the whole slitting cylinder is restored, by adding suitable additional spacer rings (not shown), positioned on opposite sides in the nearby of the spacer ring 32, 32a.

It is interesting to note on the other hand that such a sharpening, by being executed laterally on the cutting edge does not produce any pitch variation, the circumference after the resharpening remaining unchanged.

**Claims**

1. Equipment for the continuous slitting of coils of material (28), in particular coils of metal plate and the like, into longitudinal strips (27) with shaped side profile, essentially of sinusoidal and/or mixed outline, of the type comprising a base (12) onto which a stand (13) is positioned, supporting a pair of slitting cylinders (15, 15a), means for driving the rotation of said cylinders and related motor means being provided, said slitting cylinders essentially bearing a set of blades (23, 23a) with shaped perimetral cutting profile blades, said blades being positioned on said cylinders such that co-operating blades are positioned one above the other and in staggered fashion along the axes of the cylinders, such as to provide a conjugated coupling of the shears type, characterized in that each of said slitting cylinders supports rigidly a set of blades positioned on its shaft (18, 18a) with cutting edges alternately facing and not facing each other, said blades being cup-shaped and provided with central and axial bores (25), and such as to receive between an inner surface of them and the surface of the supporting shaft a spacer ring (26, 26a), between two blades facing each other at least a couple of radially elastic means (30, 30a) and between two blades not facing each other at least a spacer element (32, 32a) being provided.

2. Slitting equipment according to claim 1, characterized in that said means driving the rotation of said cylinders comprise a device for the recovery and the zeroing of the clearances, and securing the rotation of said slitting cylinders in phase.

3. Slitting equipment according to claim 1, characterized in that said radially elastic means are made of rubber or similar material, with profile complementary both to the facing and mutually opposite blades, and to the adjacent blades.

4. Slitting equipment according to claim 1, characterized in that between said couple of radially elastic elements at least a first compensator element (31) is provided.

5. Slitting equipment according to claim 1, characterized in that on opposite sides of said at least one spacer element second compensator (33) elements are provided.

6. Slitting equipment according to claim 1, characterized in that said cutting edges are accomplished by means of the addition of hard metal perimetrally applied on said cup-shaped blades.

## Patentansprüche

1. Einrichtung zum kontinuierlichen Schlitzen von Materialbunden (28), insbesondere Blechbunden u. dgl., in Längsstreifen (27) mit geformtem, im wesentlichen wellenförmige und/oder vermischte Kontur besitzendem geformtem Seitenprofil, jener Bauart, welche einen Unterbau (12) mit einem darauf angeordneten und ein Paar von Schlitzzylindern (15, 15a) abstützenden Gestell (13), einen Drehantrieb für diese Zylinder und einen zugehörigen Antriebsmotor aufweist, wobei die Schlitzzylinder im wesentlichen einen Satz von Klingen (23, 23a) mit in Umfangsrichtung verlaufenden geformten Schneidprofilklingen tragen und diese Klingen auf den Zylindern in solcher Weise angeordnet sind, daß miteinander zusammenwirkende Klingen übereinanderliegen und die Klingen entlang den Achsen der Zylinder in solcher Weise versetzt angeordnet sind, daß sich eine paarweise Kopplung vom Abschertyp ergibt, dadurch gekennzeichnet, daß jeder der Schlitzzylinder einen Satz von Klingen starr abstützt, die an der Zylinderwelle (18, 18a) abwechselnd mit einander gegenüberliegenden und einander nicht gegenüberliegenden Schneidkanten angeordnet sind und becherartig geformt und mit mittigen axialen Bohrungen (25) in solcher Weise versehen sind, daß zwischen eine Innenfläche der Klingen und der Oberfläche der abstützenden Welle ein Distanzring (26, 26a) eingeführt werden kann, wobei zwischen zwei einander gegenüberliegenden Klingen zumindest ein Paar radial elastischer Einrichtungen (30, 30a) und zwischen zwei einander nicht gegenüberliegenden Klingen zumindest ein Distanzstück (32, 32a) vorgesehen ist.

2. Schlitzeinrichtung nach Anspruch 1, dadurch gekennzeichnet, daß der Drehantrieb für die Zylinder eine Vorrichtung zum Einhalten der Spalte und zum Einstellen derselben auf Null und zum Sichern der phasengerechten Rotation der Schlitzzylinder aufweist.

3. Schlitzeinrichtung nach Anspruch 1, dadurch gekennzeichnet, daß die radial elastischen Einrichtungen aus Gummi oder ähnlichem Material mit einem Profil gefertigt sind, das sowohl zu den einander zugewendeten und einander gegenüberliegenden Klingen als auch zu den angrenzenden Klingen komplementär ist.

4. Schlitzeinrichtung nach Anspruch 1, dadurch gekennzeichnet, daß zwischen dem Paar radial elastischer Elemente zumindest ein erstes Kompensationselement (31) vorgesehen ist.

5. Schlitzeinrichtung nach Anspruch 1, dadurch gekennzeichnet, daß an einander gegenüberliegenden Seiten des zumindest einen Distanzstückes zweite Kompensationselemente (33) vorgesehen sind.

6. Schlitzeinrichtung nach Anspruch 1, dadurch gekennzeichnet, daß die Schneidkanten durch eine Hartmetallauflage vervollständigt sind, die am Umfang der becherförmigen Klingen aufgebracht sind.

## Revendications

1. Dispositif de découpe continue de feuillards de matériau (28), en particulier de feuillards de tôle métallique et similaire, en bandes longitudinales avec un profil latéral de contour essentiellement sinusoïdal et/ou mixte, du type comportant un socle (12) sur lequel est placé un support (13) supportant une paire de cylindres de découpe (15, 15a), des moyens pour commander la rotation desdits cylindres, des moyens moteurs correspondants étant prévus, lesdits cylindres de découpe portant essentiellement une série de lames (23, 23a) avec des profils de coupe circonférentiels, lesdites lames étant disposées sur lesdits cylindres de telle sorte que les lames qui coopèrent soient disposées l'une au-dessus de l'autre et en quinconce le long des axes des cylindres de façon à fournir un couple conjugué du type cisaille, caractérisé en ce que chacun des cylindres de découpe supporte rigidement une série de lames placées sur son arbre (18, 18a) avec des arêtes tranchantes qui alternativement se font face et ne se font pas face mutuellement, lesdites lames étant en forme de cuvette et munies d'alésages central et axial (25) et de façon à recevoir, entre une de leur surface intérieure et la surface de l'arbre de support, une bague d'espacement (26, 26a), au moins un couple de moyens radialement élastiques étant prévu entre deux lames se faisant face et au moins un élément d'espacement étant prévu entre deux lames ne se faisant pas face.

2. Dispositif de découpe selon la revendication 1, caractérisé en ce que lesdits moyens commandant la rotation desdit cylindres comprennent un dispositif permettant la récupération et l'annulation des jeux et assurant la rotation en phase desdits cylindres de découpe.

3. Dispositif de découpe selon la revendication 1, caractérisé en ce que lesdits moyens radialement élastiques sont réalisés en caoutchouc ou similaire avec des profils complémentaires tant des lames qui se font face que des lames mutuellement opposées et des lames adjacentes.

4. Dispositif de découpe selon la revendication 1, caractérisé en ce qu'il est prévu, entre ledit couple d'éléments radialement élastiques, au moins un premier élément compensateur (31).

5. Dispositif de découpe selon la revendication 1, caractérisé en ce qu'il est prévu, sur les côtés opposés dudit élément d'espacement, des seconds éléments compensateurs (33).

6. Dispositif de découpe selon la revendication 1, caractérisé en ce que lesdites arêtes tranchantes sont réalisées au moyen d'addition de métal dur appliqué sur le périmètre desdites lames en forme de cuvette.

# Fig.1

# Fig.2

**Fig.3**

**Fig.4**

**Fig.5**